# EUROPÄISCHE PATENTSCHRIFT

(11) **EP 4 246 011 B1**
(45) Veröffentlichungstag und Bekanntmachung des Hinweises auf die Patenterteilung: **20.08.2025**
(21) Anmeldenummer: 23162859.5
(22) Anmeldetag: 20.03.2023
(51) Int. Cl.: F16H 3/06

(54) **SCHNECKENGETRIEBE MIT UMSCHALTVORRICHTUNG**
WORM GEAR WITH SWITCHING DEVICE
ENGRENAGE À VIS SANS FIN AVEC DISPOSITIF DE COMMUTATION

(30) Priorität: 18.03.2022 DE 102022106412
(43) Veröffentlichungstag der Anmeldung: 20.09.2023
(73) Patentinhaber: Schneider, Hans-Joachim, 81541 München (DE)
(72) Erfinder: Schneider, Hans-Joachim, 81541 München (DE)
(74) Vertreter: 2s-ip Schramm Schneider Bertagnoll Patent- und Rechtsanwälte Part mbB

(56) Entgegenhaltungen:
- US-A- 1 479 167
- US-A- 2 558 180

## Beschreibung

Die Erfindung betrifft ein Schneckengetriebe mit einer Umschaltvorrichtung zum Umschalten der Drehrichtung eines Schneckenrads des Schneckengetriebes, sowie ein entsprechendes Verfahren.

Bei bekannten Schneckengetrieben sind die Steigung der Nutspur der treibenden Schnecke und die Zahnformung des getriebenen Schneckenrades auf den Drehsinn der Schnecke abgestimmt. Zum Einsatz kommen Schneckenräder beispielsweise bei der Positionierung von Plattformen, bewegter Werbung, dem Ansetzen von Werkzeugen, bei Spielgeräten, im Modellbau usw. Hierbei ist oftmals eine häufige und schnelle Umkehr der Drehrichtung (Umschaltung) des Schneckenrades erforderlich.

Die Umschaltung des Schneckenrades wird bisher meist durch ein zusätzliches Zahnradgetriebe ausgeführt. Dabei wirkt die Umkehr des Drehmomentes als Stoß auf die Schnecke und das Schneckenrad, die beide ihre Drehrichtung ändern, also umkehren. Zur Dämpfung dieses Stoßes werden die Schneckenwelle, auf welcher die Schnecke montiert ist, und das Schneckenrad vor der Umschaltung zum Stillstand gebracht. Dies behindert einen schnellen, effizienten Drehrichtungswechsel des Schneckenrads.

Bekannt sind auch Schaltungen für Zahnradgetriebe, die Schneckengetriebe mit Schnecken, die eine gegensinnige Steigung aufweisen, zum Umschalten einsetzen.

Die DD 248 636 A1 betrifft ein schaltbares Schneckengetriebe, in welchem auf einer Schneckenwelle in einer längsbeweglichen Hohlwelle Schnecken mit unterschiedlichen, auch gegensinnigen, Steigungen angebracht sind. Die Schnecken in der Hohlwelle sind mit herkömmlichen Schaltmöglichkeiten mit dem Abtriebsrad in Eingriff zu bringen, wobei allerdings keine Lösung für den hierbei auftretenden Umschaltstoß offenbart ist.

Die WO 02/066 866 A1 betrifft einen Betätigungsaktor zur automatisierten Betätigung einer Axialbewegung und Drehbewegung mittels einer zentralen Betätigungswelle mit einem Schaltfinger. In einem Bereich der Betätigungswelle sind zwei gegensinnig umlaufende Nuten eingebracht und zwei unabhängig voneinander drehbare Muffen konzentrisch zur Betätigungswelle angeordnet. Die beiden drehbaren Muffen erfahren eine Drehbewegung in dem jeweiligen Drehsinn der Nuten auf der Betätigungswelle, wobei die Bedingungen zur Umschaltung der Drehrichtung nicht beschrieben sind.

Die DE 196 35 867 C2 betrifft ein Schneckengetriebe, dessen Schneckenrad mittels einer koaxial angesetzten Excenterscheibe eine hin- und hergehende Bewegung zweier unabhängiger Schaltstangen bewirkt. Die Schaltstangen werden zum Kuppeln und Schalten gemeinsam von einem an die Schneckenwelle angesetzten Hilfsmotor bewegt, wobei die Umschaltung der Drehrichtung an dem Hilfsmotor ausgelöst wird.

Die DE 1182019 B betrifft ein Schneckengetriebe, in welchem auf einer Welle Kupplungen für den Rechts- und Linkslauf des Vorschubantriebs sowie ein Kupplungsstück angeordnet sind. Hierbei ist die Schneckenwelle nach beiden Seiten verschiebbar gelagert und steht mit dem Kupplungskörper der Kupplungen für den Links- und Rechtslauf in Verbindung. Eine Lösung für den Umschaltstoß ist auch hier nicht offenbart.

Die DE 938 453 B betrifft ein gleichachsiges Mehrfachschneckengetriebe, wobei eine halb geteilte Globoid-Schnecke antriebsmäßig in ein entsprechendes (90° abgewinkeltes) Schneckenrad eingreift. Das angetriebene Schneckenrad ist zusätzlich mit einer zur Schneckenradverzahnung stark abgewinkelten Schneckenverzahnung versehen, welche wiederum in ein Schneckenrad eingreift, das mit der Globoid-Antriebsschnecke gleichachsig angeordnet ist.

Die DE 10 2016 123 890 B3 betrifft ein Schneckengetriebe, in welchem ein Schneckenrad eine Radfelge mit einem abnehmbaren Kranz von Rotationskörpern (Kugeln) an die Schnecke ansetzt. Die Kugeln können optimal in der Schneckennut abrollen. Der Eingriff der Kugeln in die Nutspur reicht bis zum Querschnitt einer Halbkugel. Ein solcher Kugelkranz am Schneckenrad kann sowohl an gegensinnige als auch unterschiedliche Steigungen der Schneckennut angesetzt werden.

Die DE 10 2020 113 740 B4 betrifft ein Schneckengetriebe der DE 10 2016 123 890 B3, welches in einem Schaltsystem eingesetzt ist, wobei durch das Schaltsystem die Drehrichtung des Schneckenrades gewechselt werden kann. Hierbei werden die beiden Schnecken durch eine Schaltklaue versetzt. Zwischen den gegensinnig steigenden Schnecken ist eine Rolle eingefügt, die einen Freilauf des Schneckenrades ermöglicht. Zum Umschalten wird das Schneckenrad in die Freilaufposition gebracht und durch ein Blockieren dieser Rolle angehalten. Nach dem Einfahren in die gegensinnige Schnecke ist die Drehrichtung des Schneckenrades umgeschaltet, während die Schneckenwelle die gleiche Drehrichtung beibehält.

Die US 2 558 180 A betrifft ein Schneckengetriebe, in welchem kippbare Zahnstangen als Kupplungskörper für den Rechts- und Linkslauf des Vorschubantriebs an einer Spange angeordnet sind, wobei die Spange an eine Fassung der Antriebswelle angesetzt ist. Hierbei sind Schnecken mit unterschiedlicher Drehrichtung auf der Antriebswelle nach beiden Seiten verschiebbar gelagert. Die Kupplungskörper werden mit einem feststellbaren Kipphebel an die Schnecken angesetzt und bewirken dadurch den Links- oder Rechtslauf des Schneckenrads. Beim Schalten der Drehrichtung tritt allerdings ein Einrückschlag auf.

Die US 1 479 167 A betrifft ein Schneckengetriebe mit auf einer gemeinsamen Schneckenwelle verschiebbaren Schnecken, die eine unterschiedliche und gegensinnige Steigung aufweisen. Die Schnecken werden zum Umschalten durch eine Schaltgabel in Eingriff zwischen ein Paar von Schneckenrädern mit axial gegenüber an die Nutspur der Schnecken angesetzten Kronenrollen gebracht. Die Kronenrollen sind an die unterschiedlichen Steigungen und Drehrichtungen der Schnecken angepasst. Beim Schalten der Drehrichtung tritt allerdings ein Einrückschlag auf.

Aufgabe der vorliegenden Erfindung ist daher, eine Umschaltvorrichtung für ein Schneckengetriebe bereitzustellen, bei welchem das Einrücken und der damit verbundene Einrückschlag beim Schalten der Drehrichtung minimiert wird.

Diese Aufgabe wird durch ein Schneckengetriebe mit den Merkmalen des unabhängigen Patentanspruchs 1 gelöst. Vorteilhafte Ausgestaltungen des erfindungsgemäßen Schneckengetriebes sind in den abhängigen Patentansprüchen angegeben. Ferner wird die Aufgabe durch ein Verfahren zum Umschalten eines Schneckengetriebes nach dem unabhängigen Patentanspruch 10 gelöst.

Bereitgestellt wird demnach ein Schneckengetriebe, umfassend zumindest eine erste Schnecke und zumindest eine zweite Schnecke, wobei die zumindest eine erste Schnecke und die zumindest eine zweite Schnecke jeweils eine umlaufende Nutspur mit gegensinniger Steigung aufweisen, wobei die Schnecken auf einer Schneckenwelle montiert sind, und ein Schneckenrad, wobei das Schneckenrad durch einen Eingriff in die zumindest eine erste Schnecke in eine erste Drehrichtung drehbar ist und durch einen Eingriff in die zumindest eine zweite Schnecke in eine gegensinnige, zweite Drehrichtung drehbar ist, und eine Umschaltvorrichtung zum Drehrichtungswechsel des Schneckenrads.

Eine Schalteinrichtung der Umschaltvorrichtung ist mit der Schneckenwelle in einer ersten vorbestimmten Drehlage der Schneckenwelle koppelbar und die Schalteinrichtung ist von der Schneckenwelle in einer zweiten vorbestimmten Drehlage der Schneckenwelle trennbar, wobei durch eine Kopplung der Schalteinrichtung mit der Schneckenwelle die Schnecken entlang der Schneckenwelle versetzbar sind, wobei ein Versetzen der Schnecken bei einer fortlaufenden Umdrehung der Schneckenwelle durch einen Wechsel des Eingriffs des Schneckenrads von einer der zumindest einen ersten Schnecke in die Nutspur mit gegensinniger Steigung einer der zumindest einen zweiten Schnecke den Drehrichtungswechsel des Schneckenrads bewirkt.

Der Kern der Erfindung liegt darin, dass zum Drehrichtungswechsel des Schneckenrads das Versetzen der Schnecken mit der fortlaufenden Umdrehung der Schneckenwelle synchronisiert ist. Die mit der Drehung der Schneckenwelle synchronisierte Versetzung der Schnecken beschleunigt die Drehung des Schneckenrades bis zum Ausfahren aus der Schneckennut ("Nutspur") der einen Schnecke und bremst die Drehung des Schneckenrades bis zum Einfahren in die Schneckennut der anderen, gegensinnig drehenden Schnecke. Die versetzende Kraft wird von dem Drehmoment der Schneckenwelle abgenommen, womit die Änderung der Drehung des Schneckenrades gedämpft ist. Dadurch erfolgt die Umkehr der Drehrichtung mit verminderter Stoßwirkung, wobei das Schneckenrad vor dem Drehrichtungswechsel weitergedreht wird.

In einer Ausgestaltung weist die Umschaltvorrichtung zumindest ein Stellglied auf, wobei durch die Kopplung der Schalteinrichtung mit der Schneckenwelle eines des zumindest einen Stellglieds in die umlaufende Nutspur einer Schnecke eingreift, um das Versetzen der Schnecken zu bewirken, wobei das Versetzen der Schnecken bei der fortlaufenden Umdrehung der Schneckenwelle einen fließenden Wechsel des Eingriffs des Schneckenrads in die Nutspur der jeweils gegensinnig drehende Schnecke bewirkt.

Nach einem Aspekt der Erfindung können gemeinsam und einzeln verschiebbare bzw. versetzbare Schnecken oder Schneckenpaare mit gegensinnigen Steigungen auf einer gemeinsamen Schneckenwelle synchron gedreht werden. Die Schnecken(paare) können durch den Eingriff des nicht verschiebbaren Stellglieds in die Nutspur einer der verschiebbaren Schnecken versetzt werden.

Der Eingriff kann durch die Ausbildung des Stellglieds als Kugelkranz-Stangen mit zumindest zwei Kugel-Zähnen ausgeführt werden. Dies hat den Vorteil, dass die Wegstrecke der Versetzung dadurch verlängert werden kann und die Kraftwirkung auf mehrere Eingriffe verteilt angesetzt werden kann.

Die zumindest eine erste Schnecke und die zumindest eine zweite Schnecke können als erstes Schneckenpaar bzw. zweites Schneckenpaar ausgebildet sein. Jedes Schneckenpaar umfasst eine innere Schnecke und eine äußere Schnecke. Somit kann der Eingriff des zumindest einen Stellglieds auf die jeweils inneren Schnecken der Schneckenpaare direkt angesetzt werden. Ebenso kann der Eingriff des zumindest einen Stellglieds auf die jeweils äußeren Schnecken der Schneckenpaare angesetzt werden.

In einer Ausgestaltung sind eine der zumindest einen ersten Schnecke und eine der zumindest einen zweiten Schnecke auf der Schneckenwelle derart gegeneinander gesetzt montiert, dass in der ersten vorbestimmten Drehlage ein durchgängig gemeinsames Profil eines Schaltwegs gebildet ist, wobei das Schneckenrad in der ersten vorbestimmten Drehlage in Eingriff in das durchgängig gemeinsame Profil kommen kann, wobei das Schneckenrad entlang des Schaltwegs von der ersten vorbestimmten Drehlage zur zweiten vorbestimmten Drehlage führbar ist, wobei in der zweiten vorbestimmten Drehlage das durchgängig gemeinsame Profil in die jeweiligen Schnecken verzweigt, um den fließenden Wechsel des Eingriffs des Schneckenrades in die Nutspur der jeweils gegensinnig drehenden Schnecke zu ermöglichen.

Dies hat den Vorteil, dass zwischen der ersten vorbestimmten Drehlage und der zweiten vorbestimmten Drehlage eine durchgängige Versetzung der Schnecken bzw. Schneckenpaare auf der Schneckenwelle parallel zur Drehachse der Schneckenwelle möglich ist. Hierdurch wird der durchgängige Wechsel des Eingriffs des Schneckenrads, insbesondere des Kugelkranzes des Schneckenrads, in die Nutspur der jeweils gegensinnig drehenden Schnecke ermöglicht. Der Übergang des Schneckenrads von der Schneckennut der einen Schnecke zur Schneckennut der andere, gegensinnig drehenden Schnecke wird als Schaltweg bezeichnet.

Der Beginn dieses Schaltweges und die Dauer des Wechsels sind mit der Umdrehung der Schnecken synchronisiert. In der ersten vorbestimmten Drehlage der Schneckenwelle (und der auf der Schneckenwelle montierten Schnecken) beginnt der Schaltweg. Damit beginnt auch die Versetzung der Schnecken bzw. der Schneckenpaare synchron mit der fortlaufenden Drehung der Schneckenwelle. Nach einer vorbestimmten Umdrehung der Schneckenwelle sind die Versetzung der Schnecken und damit der Schaltweg in der zweiten vorbestimmten Drehposition der Schneckenwelle beendet. Beispielsweise kann die vorbestimmte Umdrehung eine halbe Umdrehung der Schneckenwelle sein.

Bei einspurigen Schnecken bewirkt eine Umdrehung der Schnecke die Drehung des Schneckenrades um einen Kugelzahn. In diesem Fall erfolgt die Versetzung der Schnecken bzw. Schneckenpaare auf der Schneckenwelle mit der halben Wegstrecke im Vergleich zur Strecke der Versetzung des Kugelzahns in der j eweiligen Nutspur. Auf diesem Schaltweg wird der Wechsel aus der Nutspur der einen Schnecke in die Nutspur der gegensinnig drehenden Schnecke vollzogen.

In einer Ausgestaltung weist die Schalteinrichtung eine Kippschiene aufweist, wobei das zumindest eine Stellglied in Kommunikation mit der Kippschiene angeordnet ist.

Die Kippschiene kann an deren beiden Enden jeweils gekippt werden, um die Richtung der Versetzung der Schnecken auszuwählen bzw. einzustellen.

Vorteilhafterweise umfasst die Umschaltvorrichtung zumindest eine Schaltsynchronscheibe, wobei die zumindest eine Schaltsynchronscheibe auf der Schneckenwelle angeordnet ist, auf einer den Schecken zugewandten Stirnseite eine konzentrische Nut umfasst, und eine radiale Aussparung umfasst, wobei eine Kopplungsstange der Schalteinrichtung angepasst ist, in der ersten vorbestimmten Drehlage der Schneckenwelle in die radiale Aussparung der Schaltsynchronscheibe einzugreifen, bei der Kopplung der Schalteinrichtung mit der Schneckenwelle in der Nut der Schaltsynchronscheibe zu verfahren und in der zweiten vorbestimmten Drehlage die Nut der Schaltsynchronscheibe zu verlassen.

Die Kopplungsstange hat zwei Enden, von denen ein Ende abhängig von der ausgewählten Richtung der Versetzung der Schnecken durch das Kippen der Kippschiene in Eingriff in die Nut der Schaltsynchronscheibe gebracht werden kann. Durch das Verfahren des Endes der Kopplungsstange in der Nut ist das Umlegen der Kippschiene während der Versetzung der Schnecken gesperrt.

Das zumindest eine Stellglied kann auch an der Kopplungsstange angesetzt sein, wobei die Kopplungsstange in Kommunikation mit der Kippschiene steht.

In einer Ausgestaltung umfasst das Schneckengetriebe eine erste innere Schnecke, eine erste äußere Schnecke, eine zweite innere Schnecke und eine zweite innere Schnecke umfasst, wobei die ersten Schnecken und die zweiten Schnecken durch zumindest eine verschiebbare Rolle beabstandet sind, wobei die zumindest eine verschiebbare Rolle unabhängig von den Schnecken drehbar ist und das durchgängig gemeinsame Profil des Schaltwegs unmittelbar erweitert, wobei das Schneckenrad in die jeweils inneren Schnecken eingreift und das zumindest eine Stellglied in die jeweils äußeren Schnecken eingreift.

Die Schneckenpaare können durch Mitdrehen der verschiebbaren Rolle im benötigten Abstand zueinander gehalten werden. Zusätzlich können die Schnecken eines Schneckenpaares durch verschiebbare Rollen beabstandet sein. Der Mindestabstand zwischen den Schnecken wird durch den Eingriff des Schneckenrads in die jeweilige Nutspur der Schnecke bestimmt. Ausschlaggebend hierfür ist, ob nur ein Zahn bzw. eine Kugel des Schneckenrads in die Nutspur eingreift, wie etwa bei einem kleinen Radius des Schneckenrads und einer breiten Nutspur der Schnecke, oder ob mehrere Kugeln in die jeweilige Nutspur eingreifen, wie bei einem größeren Radius des Schneckenrads und einer engeren Nutspur der Schnecke.

In einer Ausgestaltung umfasst die Umschaltvorrichtung ferner zumindest ein Stoppglied, wobei das zumindest eine Stoppglied zur Schneckenwelle verschiebbar ist, insbesondere in einen Abstand zwischen den Schnecken, und angepasst ist, das Versetzen der Schnecken auf der Schneckenwelle zu begrenzen.

Die Versetzung der Schnecken bzw. Schneckenpaare kann durch das zumindest eine Stoppglied blockiert werden. Hierzu wird das zumindest eine Stoppglied in den durch die mitdrehenden verschiebbaren Rollen zwischen den Schnecken geschaffenen Abstand verschoben.

Die Umschaltvorrichtung kann ferner einen elektromechanischen Sensor und einen elektromechanischen Aktuator umfassen, wobei der elektromechanische Sensor angepasst ist, die Drehlage der Schneckenwelle zu erfassen, und der elektromechanische Aktuator angepasst ist, auf Basis der erfassten Drehlage das Versetzen der Schnecken zu steuern.

Diese Ausführungsform ermöglicht, bevorzugt bei geringen Drehmomenten, schnelle, mit der Umdrehung der Schneckenwelle synchronisierte Schaltsequenzen.

Nach einem Aspekt der Erfindung können sich die Anzahl der Nutspuren und/oder die Steigung der Nutspuren zwischen der ersten inneren Schnecke und der zweiten inneren Schnecke unterscheiden. Dadurch kann das Schneckengetriebe für eine Gangschaltung eingesetzt werden.

Nach einem weiteren Aspekt der Erfindung kann die Schalteinrichtung mehrfach in verschiedenen Winkeln zur Drehfläche des Schneckenrades mit der Schneckenwelle gekoppelt werden.

Bereitgestellt wird ferner ein Verfahren zur Umschaltung eines Schneckenrades eines Schneckengetriebes, das Schneckengetriebe umfassend zumindest eine erste Schnecke und zumindest eine zweite Schnecke, wobei die zumindest eine erste Schnecke und die zumindest eine zweite Schecke jeweils eine umlaufende Nutspur mit gegensinniger Steigung aufweisen, wobei die Schnecken auf einer Schneckenwelle montiert sind, und ein Schneckenrad, wobei das Schneckenrad durch einen Eingriff in die zumindest eine erste Schnecke in eine erste Drehrichtung drehbar ist und durch einen Eingriff in die zumindest eine zweite Schnecke in eine gegensinnige, zweite Drehrichtung drehbar ist.

Das Verfahren umfasst die folgenden Schritte:
a) Aktivieren der Umschaltvorrichtung,
b) Koppeln einer Schalteinrichtung der Umschaltvorrichtung mit der Schneckenwelle in einer ersten vorbestimmten Drehlage der Schneckenwelle,
c) Versetzen der Schnecken während die Schalteinrichtung mit der Schneckenwelle gekoppelt ist, wobei das Versetzen der Schnecken bei einer fortlaufenden Umdrehung der Schneckenwelle den Drehrichtungswechsel des Schneckenrads bewirkt, und
d) Trennen der Schalteinrichtung von der Schneckenwelle in einer zweiten vorbestimmten Drehlage der Schneckenwelle um das Versetzen der Schnecken abzuschließen.

Einzelheiten und Merkmale der Erfindung sowie konkrete Ausführungsformen der Erfindung ergeben sich aus der nachfolgenden Beschreibung in Verbindung mit der Zeichnung. Es zeigt:
- Fig. 1: eine Konfiguration eines Funktionsmodells des Schneckengetriebes mit Umschaltvorrichtung nach einem Aspekt der Erfindung;
- Fig. 2: einen Ausschnitt des in Fig. 1 gezeigten Schneckengetriebes in einer Umschaltstellung;
- Fig. 3: eine 360°-Abwicklung der Schaltwege der Kugeln des Kugelzahnkranzes des Schneckenrads in einem Schneckengetriebe nach einem Aspekt der Erfindung; und
- Fig. 4: die Abwicklung der Schaltwege auf zwei um 180° verdreht angesetzte Schnecken in einem Schneckengetriebe nach einem Aspekt der Erfindung.

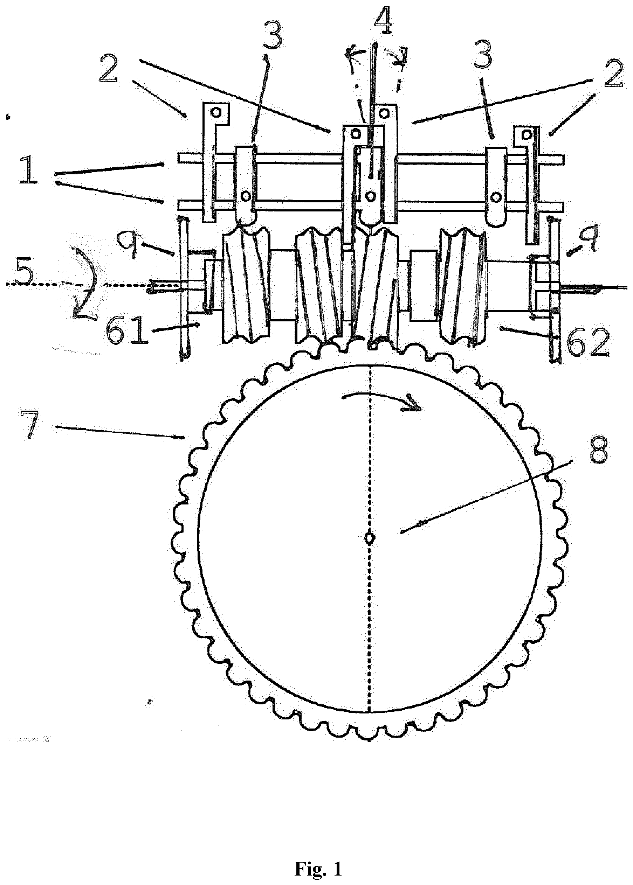

**Fig. 1** zeigt die Konfiguration eines Funktionsmodells der Schneckengetriebe-Schaltung.

In einer Ausführungsform des erfindungsgemäßen Schneckengetriebes werden gemeinsam und einzeln verschiebbare Schneckenpaare 61; 62 mit jeweils gegensinnigen Steigungen auf einer gemeinsamen Schneckenwelle 5 synchron gedreht. Ein Schneckenpaar 61; 62 besteht aus einer inneren Schnecke und einer äußeren Schnecke, wobei die beiden inneren Schnecken direkt benachbart zwischen den beiden äußeren Schnecken angesetzt sind.

Das Schneckenrad 8 ist stationär montiert und kann einen Zahnkranz 7, insbesondere einen Kugelzahnkranz 7, aufweisen, mittels welchem der Eingriff in die Nutspur 12 einer Schnecke ermöglicht wird. Bei einem Kugelzahnkranz 7 erfolgt der Eingriff durch ein Abrollen der Kugelzähne, also Rotationskörper, in der Nutspur 12 der jeweiligen Schnecke.

In dem in Fig. 1 gezeigten Betriebszustand der Ausführungsform des erfindungsgemäßen Schneckengetriebes steht das Schneckenrad 8 mit dem Kugelzahnkranz 7 im Eingriff der Nutspur 12 der inneren links drehsinnigen Schnecke des zweiten Schneckenpaares 62. Die Schneckenwelle 5 dreht sich im Uhrzeigersinn; folglich dreht sich das Schneckenrad 8 ebenso im Uhrzeigersinn.

Die Schnecken 61; 62 sind durch unabhängig drehbare, verschiebbare Rollen in einem vorbestimmten Abstand zueinander gehalten. Zwischen den beiden Schneckenpaaren und zwischen den Schnecken eines Schneckenpaares kann jeweils eine Rolle angeordnet sein.

Die Versetzung des zweiten Schneckenpaares 62 und der trennenden Spule bzw. Rolle ist durch ein zwischen den inneren Schnecken abgesenktes Stoppglied 2 ("Stoppsteller") in Richtung des ersten Schneckenpaares 61 begrenzt, und durch ein weiteres abgesenktes Stoppglied 2 in entgegengesetzter Richtung, also in Richtung des äußeren Endes der Schneckenwelle 5, begrenzt.

Die Schalteinrichtung 1 ist in einer neutralen Position ohne Kopplung zur Schneckenwelle 5. In der neutralen Position steht die Kopplungsstange der Schalteinrichtung im Wesentlichen waagrecht außerhalb des Randes der auf der Schneckenwelle 5 montierten Schaltsynchronscheibe 9. In Fig. 1 ist die Kopplungsstange jene (waagrechte) Stange der Schalteinrichtung 1, die im geringsten Abstand zur Schneckenwelle 5 angeordnet ist. In diesem Betriebszustand ist die Umschaltung der Drehrichtung des Schneckenrades 8 blockiert.

Beschleunigt sich die Umdrehung des Schneckenrades 8, etwa durch einen eigenen Antrieb, oder verringert sich die Umdrehung der Schneckenwelle 5, dann gleitet die treibende innere Schnecke des zweiten Schneckenpaares 62 selbsttätig in Richtung der äußeren Schnecke des zweiten Schneckenpaares 62 aus dem Eingriff in das Schneckenrad 8 in eine Freilaufposition.

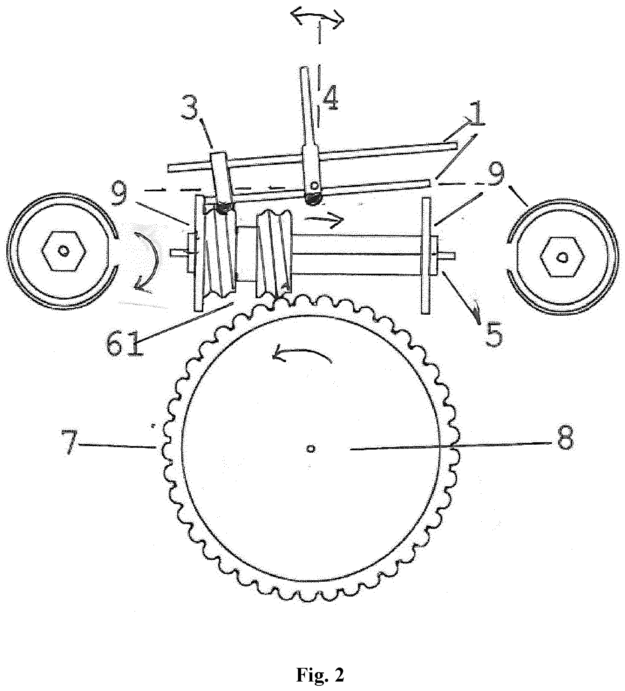

**Fig. 2** zeigt einen Ausschnitt der in Fig. 1 gezeigten Ausführungsform des erfindungsgemäßen Schneckengetriebes, ohne der Stoppsteller 2 und ohne dem zweiten Schneckenpaar 62, in einer Umschaltstellung.

Nach einem Aspekt der Erfindung erfolgt die Umschaltung durch ein Umlegen und Halten der Schalteinrichtung 1, insbesondere einer Kippschiene der Schalteinrichtung, mittels einem Kippsteller 4. Somit kann durch die Stellung der Kippschiene die Richtung der Versetzung gewählt werden und das Umschalten aktiviert werden.

Die benötigte Schubleistung für die Versetzung der Schneckenpaare 61 und 62 wird von der Schneckenwelle 5 abgenommen. Die Versetzung der Schnecken wird durch das an der Schalteinrichtung 1 angesetztes Stellglied 3 ("Schaltsteller") ausgelöst, wozu das Stellglied 3 durch das Umlegen der Schalteinrichtung 1 in Eingriff in die Nutspur einer der beiden äußeren treibenden Schnecken der Schneckenpaare 61 und 62 gebracht werden kann. In Fig. 2 gezeigt ist der Eingriff eines Stellglieds 3 in die äußere Schnecke des Schneckenpaares 61.

Zur Kopplung der Schalteinrichtung 1 mit der Schneckenwelle 5 und der daraus resultierenden Synchronisierung des Versetzens der Schnecken mit der fortlaufenden Umdrehung der Schneckenwelle 5 kann auf der Schneckenwelle 5 beidseitig je eine Schaltsynchronscheibe 9 mitgedreht werden. In die jeweils innere, den Schnecken zugewandten, Flächen der Schaltsynchronscheiben 9 ist je eine konzentrische Nut mit einer Aussparung zum Rand hin eingearbeitet, die den Eingriff und die Ausleitung der Kopplungsstange der Schalteinrichtung 1 ermöglicht.

Das Stellglied 3 ist an der Schalteinrichtung 1 fixiert angesetzt, und hat in der neutralen Schaltstellung (siehe Fig. 1) keinen Eingriff in die Nutspur einer äußeren Schnecke 61; 62.

In der in Fig. 2 gezeigten Umschaltstellung wird mit dem an der Schalteinrichtung 1 angesetzten Kippsteller 4 ein Ende der Kopplungsstange an den äußeren Rand der entsprechenden Schaltsynchronscheibe 9 gedrückt, bis der Schaltbeginn, d.h. eine erste vorbestimmte Drehlage der gegeneinander gesetzten Nutspuren 12 der inneren Schnecken der Schneckenpaare 61 und 62, erreicht ist. Durch die radiale Aussparung der Schaltsynchronscheibe 9 kann das Ende der Kopplungsstange in die Nutspur der Schaltsynchronscheibe 9 eingreifen. Dadurch kämmt der rollende Kugelzahn am Kopf des fest positionierten Stellglieds 3 in einer vorbestimmten Position der Nutspur der äußeren Schnecke des Schneckenpaares 61, und es beginnt die Versetzung der Schneckenpaare 61; 62 parallel zur Drehachse der Schneckenwelle 5.

In Fig. 2 sind zusätzlich die Schaltsynchronscheiben 9 in der seitlichen Aufsicht gezeigt. In dieser Ausführungsform weist eine Schaltsynchronscheibe 9 einen sechseckigen Kern auf, welcher auf den Querschnitt einer auf der Schneckenwelle 5 fixierten Spindel angepasst ist. Die Schaltsynchronscheiben 9 sind auf der Spindel fixiert, während die Schneckenpaare 61; 62 mit den als Abstandhalter angeordneten gleitenden Spulen bzw. Rollen auf der Spindel verschiebbar sind.

Am Rand der Schaltsynchronscheiben 9 ist in Fig. 2 die Nut zur Aufnahme der Kopplungsstange der Schalteinrichtung 1 gezeigt. Die Führungsrinnen am Rand der Schaltsynchronscheiben 9 weisen jeweils eine radiale Aussparung ("Lücke") auf, wobei die radiale Aussparung diejenige Position bzw. Drehlage kennzeichnet, in der die Versetzung der Schnecken beginnt. Denn ausschließlich die Lücke der Führungsrinne erlaubt den Eingriff der Kopplungsstange in die Nut der Schaltsynchronscheibe 9.

Mit dem Eingriff der Kopplungsstange wird das zugeordnete Stellglied 3 zum Eingriff in die Nutspur der äußeren Schnecke des ersten Schneckenpaares 61 gebracht. Der Kopf des Stellglieds 3, der in der Nutspur der äußeren Schnecke des ersten Schneckenpaares 61 durch die fortlaufende Drehung der Schneckenwelle 5 abrollt, bewirkt die Versetzung des ersten Schneckenpaares 61. Hierdurch wird die innere Schnecke des ersten Schneckenpaares 61 in Eingriff mit dem Kugelzahnkranz 7 des Schneckenrades 8 gebracht, und verdrängt die innere Schnecke des zweiten Schneckenpaares 62 aus dem Eingriff mit dem Kugelzahnkranz 7 des Schneckenrades 8. Während der Versetzung der Schneckenpaare 61; 62 bleibt das Umlegen der Kippschiene 1 gesperrt, da das Ende der Kopplungsstange in der Nutspur der Schaltsynchronscheibe 9 geführt ist.

Durch die Rotation der Schneckenwelle 5 werden die äußere versetzende Schnecke, gegebenenfalls die Abstandhalter (Rollen) und die innere Schnecke des ersten Schneckenpaares 61 synchron versetzt. Synchron dazu wird nach einer vorbestimmten, z.B. einer halben, Umdrehung der Schneckenwelle 5 der Eingriff der gegensinnig steigenden Nutspur 12 der inneren Schnecke des anderen Schneckenpaares 62 aus dem Kugelzahnkranz 7 des Schneckenrades 8 ausgeleitet und die innere Schnecke des versetzenden Schneckenpaares 61 in Eingriff in den Kugelzahnkranz 7 des Schneckenrades 8 gebracht. Nach der weiteren halben Umdrehung der Schneckenwelle kann das Ende der Kopplungsstange aus der Nut der Schaltsynchronscheibe 9 ausgleiten und die Schalteinrichtung 1 in die neutrale Stellung zurückkehren. Alternativ kann das Ende der Kopplungsstange zur weiteren Versetzung, etwa für die Freigabe der Rotation des Schneckenrades, weiter in die Nut der Schaltsynchronscheibe 9 eingreifen.

Der Wechsel der Nutspur 12 von der einen Schnecke zur anderen Schnecke ist fließend, bis die Nutspur 12 der jeweils gegensinnigen Schnecke mit dem Kugelzahnkranz 7 des Schneckenrades 8 kämmt. Der Übergang erfolgt mit einer Freigabe des Schneckenrades 8 zwischen den vorbestimmten Drehpositionen 51; 52. Die Freigabe des Schneckenrades 8 wird von der Breite der Rolle zwischen den Schneckenpaaren 61; 62 bestimmt.

Mittels des Stoppglieds 2 kann die Versetzung der Schneckenpaare 61 und 62 unterbrochen werden, und so eine Freilaufstellung des Schneckenrades 8 gehalten werden. Die Freilaufstellung kann gegebenenfalls zum Kuppeln und/oder Blockieren des Schneckenrades 8 erforderlich sein, bei einer fortlaufenden Umdrehung der Schneckenwelle 5. In dem in Fig. 2 gezeigten Ausführungsbeispiel ist die Umschaltung der Drehrichtung des Schneckenrades 8 somit in einer Umdrehung der Schnecken 61; 62 möglich.

Nach der Versetzung steht das Schneckenrad 8 mit dem Kugelzahnkranz 7 im Eingriff der Nutspur der ersten inneren, rechts drehsinnigen Schnecke des ersten Schneckenpaares 61. Die Schneckenwelle 5 dreht sich weiter im Uhrzeigersinn (wie auch in Fig. 1 gezeigt ist); während sich das Schneckenrad 8 nach dem Versetzen nach links dreht. Folglich ist die Drehrichtung des Schneckenrades 8 umgeschaltet.

Sofern das Schneckenrad 8 keinen eigenen Antrieb aufweist, bleibt der Kugelzahnkranz 7 des Schneckenrades 8 während der Umschaltung im durchgehenden Eingriff in der Nutspur 12 der inneren Schnecke des ersten Schneckenpaares 61 oder des zweiten Schneckenpaares 62. Bei einer Beschleunigung der Umdrehung des Schneckenrades 8 durch einen eigenen Antrieb bzw. bei einer Reduktion der Drehgeschwindigkeit der Schneckenwelle 5 gleitet die treibende innere linke Schnecke des ersten Schneckenpaares 61 selbsttätig in Richtung der korrespondierenden äußeren Schnecke aus dem Eingriff in das Schneckenrad 8 in die Freilaufposition, sofern das Stoppglied 2 diese Versetzung nicht blockiert.

In einem weiteren Ausführungsbeispiel kann der Kippsteller 4 auch die Funktion eines Stoppglieds 2 übernehmen. Hierfür kann der Kippsteller 4 auf der Kippschiene gegen die Schnecken hin verschiebbar ausgebildet sein.

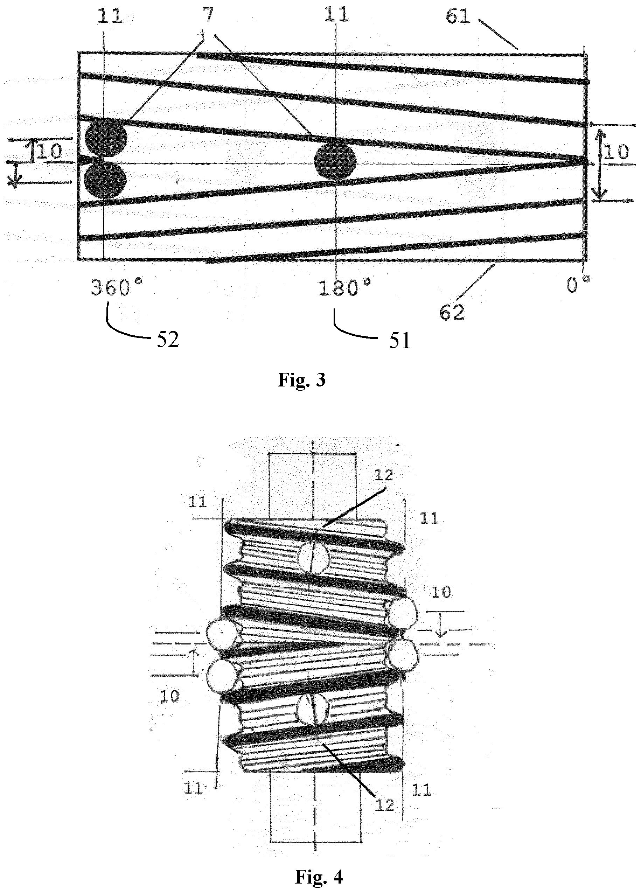

**Fig. 3** zeigt die 360° Abwicklung der Schaltwege der Kugeln des Kugelzahnkranzes 7.

Die in der Fig. 3 gezeigten Abwicklung der gegensinnig steigenden Nutspuren 12 zweier inneren Schnecken 61; 62 umfasst in der Drehposition 0° bzw. 360° einen spitzen Winkel 10 der Nutspuren. In der weiteren Beschreibung folgt die Drehrichtung der Schneckenpaare 61; 62 der Richtung der Winkelspitze 10.

Bei einspurigen Schnecken zeigen die Querschnitte der Nutspuren (Profile) 11 an den beiden inneren aneinander gefügten Schnecken 61; 62 in den vorbestimmten, synchronen Drehlagen 51; 52 bei den Drehwinkeln 0° und 180° ein durchgängiges gemeinsames Profil für den Eingriff der Kugeln 7 des Schneckenrades 8 in die Nutspuren der beiden inneren Schnecken 61; 62. Die erste vorbestimmte Drehlage 51 der Schneckenwelle 5 entspricht dabei einem Drehwinkel von 180°, die zweite vorbestimmte Drehlage 52 entspricht einem Drehwinkel von 0° bzw. 360°. Zwischen diesen beiden Drehpositionen 51; 52 ist eine durchgängige Versetzung der Schneckenpaare 61; 62 auf der Schneckenwelle 5 parallel zu deren Drehachse möglich und damit der durchgängige Wechsel des Eingriffs des Kugelzahns des Kugelzahnkranzes 7 des Schneckenrades 8 in die Nutspur 12 der jeweils gegensinnig drehenden Schnecke. Dieser Übergang wird als Schaltweg bezeichnet.

Der Beginn dieses Schaltweges und die Dauer des Übergangs sind mit der fortlaufenden Umdrehung der Schnecken 61; 62 synchronisiert. In der ersten vorbestimmten Drehlage 51 beginnt der Schaltweg. Beim Durchgang der Drehposition von 180° am Kugelzahnkranz 7 des Schneckenrades 8 beginnt auch die Versetzung der Schneckenpaare 61 und 62 synchron mit der fortlaufenden, also nicht unterbrochenen, Drehung der Schneckenwelle 5. Nach einer halben Umdrehung der Schneckenpaare ist die Versetzung beendet und dementsprechend das Ende des Schaltwegs in der Drehposition 360°, der zweiten vorbestimmten Drehlage, erreicht.

Bei einspurigen Schnecken 61; 62 bewirkt eine Umdrehung der Schnecke die Drehung des Schneckenrades 8 um einen Kugelzahn des Kugelzahnkranzes 7. In der vorliegenden Ausgestaltung des Schneckengetriebes nach einem Aspekt der Erfindung entspricht die Wegstrecke der Versetzung der Schneckenpaare 61 und 62 entlang der Drehachse der Schneckenwelle 5 der halben Strecke der Versetzung des Kugelzahnes 7 in der Nutspur 12 entlang des Schaltwegs. Auf diesem Schaltweg erfolgt also der Wechsel aus der Nutspur 12 der einen Schnecke in die Nutspur 12 der gegensinnig drehenden Schnecke.

In dieser Konfiguration ist demnach eine Umschaltung des Schneckenrades 8 pro Umdrehung der Schneckenwelle 5 möglich.

Bewirkt der Eingriff des Kugelkranzes 7 in die Nutspuren 12 der Schnecken beim Überwinden der Wegstrecke in der Breite der Freilaufrolle zwischen den Schneckenpaaren 61; 62 mehr als nur die Strecke der Versetzung eines Kugelzahnes - und damit eine längere für die Versetzung benötigte Wegstrecke des Schaltweges -, kann die Strecke der Versetzung der Schneckenpaare 61; 62 durch eine Erhöhung der Steigung oder durch eine mehrfache Umdrehung der treibenden Schnecke angepasst werden. In dieser Ausführung des Schneckengetriebes werden keine äußeren treibenden Schnecken eingesetzt. Diese Ausführung erlaubt eine kompakte Bauweise.

Die in Fig. 1, Fig. 2 und Fig. 3 gezeigten Ausführungsformen des Schneckengetriebes nach einem Aspekt der Erfindung können in den bekannten Anwendungen von Schneckengetrieben, beispielsweise bei der Positionierung von Plattformen, bewegter Werbung, dem Ansetzen von Werkzeug, bei Spielgeräten oder im Modellbau eingesetzt werden.

**Fig. 4** zeigt die Abwicklung der Schaltwege auf zwei um 180° verdreht angesetzte Schnecken

Die zwei in Fig. 4 gezeigten Schnecken sind um 180° verdreht angesetzt. Zusätzlich sind die Rollachsen der Kugeln des Kugelkranzes 7 gegeneinander gekippt ausgerichtet. Hieraus resultieren Schaltwege, die in dieser Konfiguration zwei Umschaltungen pro Umdrehung der Schneckenwelle 5 ermöglichen.

In diesem Ausführungsbeispiel ist zwischen den beiden gemeinsam drehenden gegensinnigen Schnecken 61; 62 keine Rolle als Abstandshalten vorgesehen. Somit hat das Schneckenrad 8 keine Freilaufposition während der Umschaltung, wodurch die Selbsthemmung des Schneckengetriebes erhalten bleibt. Die Drehpositionen und damit die Nutspuren dieser beiden inneren Schnecken 61; 62 sind gegeneinander um 180° verdreht. Damit ist das zweimalige Umschalten während einer Umdrehung der Schneckenwelle 5 möglich. In diesem Ausführungsbeispiel sind keine äußeren versetzenden Schnecken vorgesehen. Diese Ausführung erlaubt eine kompakte Bauweise. Die Auslösung der Versetzung wird durch eine Schaltklaue und die Schaltsynchronscheiben 9 gesteuert. Der Versetzungsweg entspricht dem viertel Abstand zwischen den Kugelzähnen des Schneckenrades 8. Die Schaltklaue überwindet diesen Schaltweg in der von der Steigung der Schnecke 61; 62 vorgegebenen Zeitspanne einer viertel Umdrehung. Die Versetzung wird durch die Schaltsynchronscheiben 8 ausgelöst. Die Schaltklaue wird durch äußere Krafteinwirkung bewegt. Die Auslösung erfolgt bevorzugt über optische Sensoren. Diese Ausführung ermöglicht - bevorzugt bei geringen Drehmomenten - schnelle, mit der Umdrehung der Schneckenwelle 5 synchronisierte Schaltsequenzen.

Mit diesem Ausführungsbeispiel können beispielsweise in der Robotertechnik die Bewegungen der Aktuatoren präzise gesteuert werden. Hierdurch kann die Kontaktzeitspanne für beispielsweise ein kurzzeitiges Ansetzen von Messfühlern mit der davon abhängigen Werkzeugsteuerung minimiert werden.

Sofern eine Freilaufstellung für die inneren Schnecken vorgesehen ist, und die Versetzung in die Freilaufstellung freigegeben ist, dann bedingt eine selbsttätige beschleunigte Umdrehung des Schneckenrades 8 automatisch die Versetzung der inneren Schnecke in die Freilaufstellung. Diese Freilaufstellung kann so beispielsweise bei einem Einsatz des Schneckengetriebes als Starthilfe, beim Anlaufen des Hauptantriebs, selbsttätig erreicht werden.

Bei einer Anwendung des Schneckengetriebes nach einem Aspekt der Erfindung beim Antrieb mit Elektromotoren kann das Umpolen zur Umschaltung der Drehrichtung ersetzt werden, und damit die effektive Wirkung erhöht werden.

Bei einer Anwendung des Schneckengetriebes nach einem Aspekt der Erfindung beim Antrieb mit Druckluftmotoren kann das Öffnen und Schließen von Ventilen für die Umschaltung der Drehrichtung ersetzt werden, und damit die zusätzliche Drucklast der strömenden Medien zum Aufnehmen des Schaltstoßes gemindert werden.

In einem weiteren Anwendungsbeispiel kann das Schneckengetriebe gemäß einem Aspekt der Erfindung zum Manövrieren eines Müll-Prahms eingesetzt werden. Die Kraftübertragungseinrichtung für einen Müll-Prahm bewegt meist nur leichte Ladungen. Die Umschaltung erfolgt bei kleiner Fahrt mit minderen Drehmomentwechseln des Antriebs. Für die Manöver Seitendrift und Halten von Positionen bzw. Abstände zu Hindernissen muss das Antriebssystem schnelle Lastwechsel, Freilauf und Drehrichtungsänderung durchführen können.

Das in DE 10 2016 123 890 B3 beschriebene Schaltsystem für den Dual-Propeller Antrieb mit Schneckengetriebe erlaubt es, direkt die Drehrichtung der Schneckensteigung zu wechseln, und damit die Schubumkehr. Mit dem Schneckengetriebe nach einem Aspekt der Erfindung sind darüber hinaus durch den direkt einsetzenden Umkehrschub kürzere Bremswege und rasche Manöver mit Fahrtumkehr möglich, da die Wirkung des Antriebs auf die Ruderflächen ohne Unterbruch zur Verfügung steht. Auch die Umschaltung der Drehrichtung der Antriebswelle ist nicht erforderlich. Damit können an der gleichen Antriebswelle auch zwei Propellerantriebe unabhängig voneinander umgeschaltet werden.

### Bezugszeichen:

- 1: Schalteinrichtung, umfassend Kippschiene und Kopplungsstange
- 2: Stoppglied auf/ab einstellbar als Begrenzer der Versetzung der Schnecken
- 3: Stellglied feststehend an Schalteinrichtung 1, mit Kugelzahn
- 4: Kippsteller Schalthebel zum Kippen der Schalteinrichtung 1 um deren Querachse
- 5: Schneckenwelle, vorzugsweise mit sechskantiger Spindel für Schnecken 61 und 62, Spulen und Schaltsynchronscheiben 9
- 51: erste vorbestimmte Drehlage der Schneckenwelle 5
- 52: zweite vorbestimmte Drehlage der Schneckenwelle 5
- 61: zumindest eine erste Schnecke, vorzugsweise mit rechts drehsinnige Steigung, verschiebbar auf Schneckenwelle 5
- 62: zumindest eine zweite Schnecke, vorzugsweise links drehsinnige Steigung, verschiebbar auf Schneckenwelle 5
- 7: Kugelzahnkranz an Schneckenrad 8
- 8: Schneckenrad
- 9: Schaltsynchronscheiben an Schneckenwelle 5
- 10: spitzer Winkel der Nutspuren der gegensinnigen (gespiegelten) Schnecken 61; 62
- 11: Querschnitte der Nutspuren (Profile) der gegensinnigen Schnecken 61; 62 an den Drehpositionen 51; 52 der Schneckenwelle
- 12: Nutspur einer Schnecke

## Patentansprüche

1. Schneckengetriebe, umfassend zumindest eine erste Schnecke (61) und zumindest eine zweite Schnecke (62), wobei die zumindest eine erste Schnecke und die zumindest eine zweite Schnecke jeweils eine umlaufende Nutspur (12) mit zueinander gegensinniger Steigung aufweisen, wobei die Schnecken auf einer Schneckenwelle (5) montiert sind, und ein Schneckenrad (8), wobei das Schneckenrad (8) durch einen Eingriff in eine der zumindest einen ersten Schnecke (61) in eine erste Drehrichtung drehbar ist und durch einen Eingriff in eine der zumindest einen zweiten Schnecke (62) in eine gegensinnige, zweite Drehrichtung drehbar ist, und eine Umschaltvorrichtung zum Drehrichtungswechsel des Schneckenrads (8),
wobei eine Schalteinrichtung (1) der Umschaltvorrichtung mit der Schneckenwelle (5) in einer ersten vorbestimmten Drehlage (51) der Schneckenwelle (5) koppelbar ist und die Schalteinrichtung (1) von der Schneckenwelle (5) in einer zweiten vorbestimmten Drehlage (52) der Schneckenwelle trennbar ist, wobei durch eine Kopplung der Schalteinrichtung (1) mit der Schneckenwelle (5) die Schnecken (61; 62) entlang der Schneckenwelle (5) versetzbar sind, wobei ein Versetzen der Schnecken (61; 62) bei einer fortlaufenden Umdrehung der Schneckenwelle (5) durch einen Wechsel des Eingriffs des Schneckenrads (8) von einer der zumindest einen ersten Schnecke (61) in die Nutspur mit gegensinniger Steigung einer der zumindest einen zweiten Schnecke (62) den Drehrichtungswechsel des Schneckenrads (8) bewirkt.

2. Schneckengetriebe nach Anspruch 1, wobei die Umschaltvorrichtung zumindest ein Stellglied (3) aufweist, wobei durch die Kopplung der Schalteinrichtung (1) mit der Schneckenwelle (5) eines des zumindest einen Stellglieds (3) in die umlaufende Nutspur (12) einer Schnecke (61; 62) eingreift, um das Versetzen der Schnecken (61; 62) zu bewirken, wobei das Versetzen der Schnecken (61; 62) bei der fortlaufenden Umdrehung der Schneckenwelle (5) einen Wechsel des Eingriffs des Schneckenrads (8) in die Nutspur (12) der jeweils gegensinnig drehende Schnecke (61; 62) bewirkt.

3. Schneckengetriebe nach einem der vorhergehenden Ansprüche, wobei eine der zumindest einen ersten Schnecke (61) und eine der zumindest einen zweiten Schnecke (62) auf der Schneckenwelle (5) derart gegeneinander gesetzt montiert sind, dass in der ersten vorbestimmten Drehlage (51) ein durchgängig gemeinsames Profil (11) eines Schaltwegs gebildet ist, wobei das Schneckenrad (8) in der ersten vorbestimmten Drehlage (51) in Eingriff in das durchgängig gemeinsame Profil (11) kommen kann, wobei das Schneckenrad (8) entlang des Schaltwegs von der ersten vorbestimmten Drehlage (51) zur zweiten vorbestimmten Drehlage (52) führbar ist, wobei in der zweiten vorbestimmten Drehlage (52) das durchgängig gemeinsame Profil in die jeweiligen Schnecken (61; 62) verzweigt, um den fließenden Wechsel des Eingriffs des Schneckenrades (8) in die Nutspur (12) der jeweils gegensinnig drehenden Schnecke (61; 62) zu ermöglichen.

4. Schneckengetriebe nach Anspruch 2, wobei die Schalteinrichtung (1) eine Kippschiene aufweist, wobei das zumindest eine Stellglied (3) in Kommunikation mit der Kippschiene angeordnet ist.

5. Schneckengetriebe nach einem der vorhergehenden Ansprüche, wobei die Umschaltvorrichtung zumindest eine Schaltsynchronscheibe (9) umfasst, wobei die zumindest eine Schaltsynchronscheibe (9) auf der Schneckenwelle (5) angeordnet ist, auf einer den Schecken (61; 62) zugewandten Stirnseite eine konzentrische Nut umfasst, und eine radiale Aussparung umfasst, wobei eine Kopplungsstange der Schalteinrichtung (1) angepasst ist, in der ersten vorbestimmten Drehlage (51) der Schneckenwelle (5) in die radiale Aussparung der Schaltsynchronscheibe (9) einzugreifen, bei der Kopplung der Schalteinrichtung (1) mit der Schneckenwelle (5) in der Nut der Schaltsynchronscheibe (9) zu verfahren und in der zweiten vorbestimmten Drehlage (52) die Nut der Schaltsynchronscheibe (9) zu verlassen.

6. Schneckengetriebe nach dem vorhergehenden Anspruch, unter Rückbezug auf Anspruch 2, wobei das zumindest eine Stellglied (3) an der Kopplungsstange angesetzt ist.

7. Schneckengetriebe nach Anspruch 3, wobei das Schneckengetriebe eine erste innere Schnecke, eine erste äußere Schnecke, eine zweite innere Schnecke und eine zweite innere Schnecke umfasst, wobei die ersten Schnecken (61) und die zweiten Schnecken (62) durch zumindest eine verschiebbare Rolle beabstandet sind, wobei die zumindest eine verschiebbare Rolle unabhängig von den Schnecken drehbar ist und das durchgängig gemeinsame Profil (11) des Schaltwegs unmittelbar erweitert, wobei das Schneckenrad (8) in die jeweils inneren Schnecken (61; 62) eingreift und das zumindest eine Stellglied (3) in die jeweils äußeren Schnecken (61; 62) eingreift.

8. Schneckengetriebe nach einem der vorhergehenden Ansprüche, wobei die Umschaltvorrichtung ferner zumindest ein Stoppglied (2) umfasst, wobei das zumindest eine Stoppglied (2) zur Schneckenwelle (5) verschiebbar ist, insbesondere in einen Abstand zwischen den Schnecken (61; 62), und angepasst ist, das Versetzen der Schnecken (61; 62) auf der Schneckenwelle (5) zu begrenzen.

9. Schneckengetriebe nach einem der vorhergehenden Ansprüche, wobei die Umschaltvorrichtung ferner einen elektromechanischen Sensor und einen elektromechanischen Aktuator umfasst, wobei der elektromechanische Sensor angepasst ist, die Drehlage der Schneckenwelle (5) zu erfassen, und der elektromechanische Aktuator angepasst ist, auf Basis der erfassten Drehlage das Versetzen der Schnecken (61; 62) zu steuern.

10. Verfahren zur Umschaltung eines Schneckenrades (8) eines Schneckengetriebes nach einem der Ansprüche 1 bis 9,wobei das Verfahren die folgenden Schritte umfasst:
a) Aktivieren der Umschaltvorrichtung,
b) Koppeln einer Schalteinrichtung (1) der Umschaltvorrichtung mit der Schneckenwelle (5) in einer ersten vorbestimmten Drehlage (11a) der Schneckenwelle (5),
c) Versetzen der Schnecken (61; 62) während die Schalteinrichtung(1) mit der Schneckenwelle (5) gekoppelt ist, wobei das Versetzen der Schnecken (61; 62) bei einer fortlaufenden Umdrehung der Schneckenwelle (5) den Drehrichtungswechsel des Schneckenrads (8) bewirkt, und
d) Trennen der Schalteinrichtung (1) von der Schneckenwelle (5) in einer zweiten vorbestimmten Drehlage (52) der Schneckenwelle (5) um das Versetzen der Schnecken (61; 62) abzuschließen.

## Claims

1. Worm gear comprising at least one first worm (61) and at least one second worm (62), wherein the at least one first worm and the at least one second worm each comprise a circumferential groove track (12) having mutually opposing pitches, wherein the worms are mounted on a worm shaft (5), and comprising a worm wheel (8), wherein the worm wheel (8) is rotatable in a first direction of rotation by engaging in one of the at least one first worm (61) and is rotatable in an opposite, second direction of rotation by engaging in one of the at least one second worm (62), and comprising a switching apparatus for changing the direction of rotation of the worm wheel (8),
wherein a shifting device (1) of the switching apparatus can be coupled to the worm shaft (5) in a first predetermined rotational position (51) of the worm shaft (5) and the shifting device (1) can be disconnected from the worm shaft (5) in a second predetermined rotational position (52) of the worm shaft, wherein, by coupling the shifting device (1) to the worm shaft (5), the worms (61; 62) can be displaced along the worm shaft (5), wherein displacing the worms (61; 62) during a continuous rotation of the worm shaft (5) by changing the engagement of the worm wheel (8) by one of the at least one first worm (61) in the groove track having an opposing pitch of one of the at least one second worm (62) causes the direction of rotation of the worm wheel (8) to change.

2. Worm gear according to claim 1, wherein the switching apparatus comprises at least one actuator (3), wherein, by coupling the shifting device (1) to the worm shaft (5), one of the at least one actuator (3) engages in the circumferential groove track (12) of a worm (61; 62) in order to effect the displacement of the worms (61; 62), wherein displacing the worms (61; 62) during the continuous rotation of the worm shaft (5) effects a change in the engagement of the worm wheel (8) in the groove track (12) of the relevant counter-rotating worm (61; 62).

3. Worm gear according to one of the preceding claims, wherein one of the at least one first worm (61) and one of the at least one second worm (62) are mounted on the worm shaft (5) so as to be placed counter to one another such that a continuously common profile (11) of a shift path is formed in the first predetermined rotational position (51), wherein the worm wheel (8) can engage in the continuously common profile (11) in the first predetermined rotational position (51), wherein the worm wheel (8) can be guided along the shift path from the first predetermined rotational position (51) to the second predetermined rotational position (52), wherein, in the second predetermined rotational position (52), the continuously common profile branches into the relevant worms (61; 62) in order to allow smooth changing of the engagement of the worm wheel (8) in the groove track (12) of each counter-rotating worm (61; 62).

4. Worm gear according to claim 2, wherein the shifting device (1) has a tilting rail, wherein the at least one actuator (3) is arranged in communication with the tilting rail.

5. Worm gear according to one of the preceding claims, wherein the switching apparatus comprises at least one shift synchronizing disk (9), wherein the at least one shift synchronizing disk (9) is arranged on the worm shaft (5), comprises a concentric groove on an end face facing the worms (61; 62), and comprises a radial recess, wherein a coupling rod of the shifting device (1) is adapted, in the first predetermined rotational position (51) of the worm shaft (5), to engage in the radial recess of the shift synchronizing disk (9), to move in the groove of the shift synchronizing disk (9) when the shifting device (1) is coupled to the worm shaft (5), and, in the second predetermined rotational position (52), to leave the groove of the shift synchronizing disk (9).

6. Worm gear according to the preceding claim, with reference back to claim 2, wherein the at least one actuator (3) is attached to the coupling rod.

7. Worm gear according to claim 3, wherein the worm gear comprises a first inner worm, a first outer worm, a second inner worm, and a second inner worm, wherein the first worms (61) and the second worms (62) are spaced apart by at least one displaceable roller, wherein the at least one displaceable roller is rotatable independently of the worms and directly widens the continuously common profile (11) of the switching path, wherein the worm wheel (8) engages in each of the inner worms (61; 62) and the at least one actuator (3) engages in each of the outer worms (61; 62).

8. Worm gear according to any of the preceding claims, wherein the switching apparatus further comprises at least one stop member (2), wherein the at least one stop member (2) is displaceable relative to the worm shaft (5), in particular into a gap between the worms (61; 62), and is adapted to limit the displacement of the worms (61; 62) on the worm shaft (5).

9. Worm gear according to any of the preceding claims, wherein the switching apparatus further comprises an electromechanical sensor and an electromechanical actuator, wherein the electromechanical sensor is adapted to detect the rotational position of the worm shaft (5), and the electromechanical actuator is adapted to control the displacement of the worms (61; 62) on the basis of the detected rotational position.

10. Method for switching a worm wheel (8) of a worm gear according to any of claims 1 to 9, wherein the method comprises the following steps:
a) activating the switching apparatus,
b) coupling a shifting device (1) of the switching apparatus to the worm shaft (5) in a first predetermined rotational position (11a) of the worm shaft (5),
c) displacing the worms (61; 62) while the shifting device (1) is coupled to the worm shaft (5), wherein displacing the worms (61; 62) effects the change of direction of rotation of the worm wheel (8) during a continuous rotation of the worm shaft (5), and
d) disconnecting the shifting device (1) from the worm shaft (5) in a second predetermined rotational position (52) of the worm shaft (5) in order to complete the displacement of the worms (61; 62).

## Revendications

1. Engrenage à vis sans fin, comprenant au moins une première vis sans fin (61) et au moins une seconde vis sans fin (62), dans lequel l'au moins une première vis sans fin et l'au moins une seconde vis sans fin présentent respectivement une piste de rainure (12) circonférentielle comportant des pas opposés l'un à l'autre, dans lequel les vis sans fin sont montées sur un arbre à vis sans fin (5), et une roue à vis sans fin (8), dans lequel la roue à vis sans fin (8) peut être tournée dans un premier sens de rotation par une mise en prise avec l'une des au moins une première vis sans fin (61) et peut être tournée dans un second sens de rotation opposé par une mise en prise avec l'une des au moins une seconde vis sans fin (62), et un dispositif de commutation pour le changement de sens de rotation de la roue à vis sans fin (8),
dans lequel un appareil de commutation (1) du dispositif de commutation peut être accouplé à l'arbre à vis sans fin (5) dans une première position de rotation prédéterminée (51) de l'arbre à vis sans fin (5) et l'appareil de commutation (1) peut être séparé de l'arbre à vis sans fin (5) dans une seconde position de rotation prédéterminée (52) de l'arbre à vis sans fin, dans lequel les vis sans fin (61 ; 62) peuvent être déplacées le long de l'arbre à vis sans fin (5) par un accouplement de l'appareil de commutation (1) et de l'arbre à vis sans fin (5), dans lequel un décalage des vis sans fin (61 ; 62), lors d'une rotation continue de l'arbre à vis sans fin (5) par un changement de la mise en prise de la roue à vis sans fin (8) d'une des au moins une première vis sans fin (61) dans la piste de rainure avec un pas opposé d'une des au moins une seconde vis sans fin (62), provoque le changement de sens de rotation de la roue à vis sans fin (8).

2. Engrenage à vis sans fin selon la revendication 1, dans lequel le dispositif de commutation présente au moins un organe de réglage (3), dans lequel l'un des au moins un organe de réglage (3) vient en prise avec la piste de rainure (12) circonférentielle d'une vis sans fin (61 ; 62) par l'accouplement de l'appareil de commutation (1) et de l'arbre à vis sans fin (5) afin de provoquer le décalage des vis sans fin (61 ; 62), dans lequel le décalage des vis sans fin (61 ; 62) provoque, lors de la rotation continue de l'arbre à vis sans fin (5), un changement de mise en prise de la roue à vis sans fin (8) dans la piste de rainure (12) de la vis sans fin (61 ; 62) tournant respectivement dans le sens opposé.

3. Engrenage à vis sans fin selon l'une des revendications précédentes, dans lequel l'une des au moins une première vis sans fin (61) et l'une des au moins une seconde vis sans fin (62) sont montées de manière à être placées l'une contre l'autre sur l'arbre à vis sans fin (5) de telle sorte qu'un profil commun continu (11) d'un trajet de commutation est formé dans la première position de rotation prédéterminée (51), dans lequel la roue à vis sans fin (8) peut, dans la première position de rotation prédéterminée (51), venir en prise avec le profil commun continu (11), dans lequel la roue à vis sans fin (8) peut être guidée le long du trajet de commutation de la première position de rotation prédéterminée (51) à la seconde position de rotation prédéterminée (52), dans lequel le profil commun continu, dans la seconde position de rotation prédéterminée (52), bifurque dans la vis sans fin (61 ; 62) respective afin de permettre le changement fluide de la mise en prise de la roue à vis sans fin (8) dans la piste de rainure (12) de la vis sans fin (61 ; 62) tournant respectivement dans le sens opposé.

4. Engrenage à vis sans fin selon la revendication 2, dans lequel l'appareil de commutation (1) présente un rail basculant, dans lequel l'au moins un organe de réglage (3) est disposé en communication avec le rail basculant.

5. Engrenage à vis sans fin selon l'une des revendications précédentes, dans lequel le dispositif de commutation comprend au moins un disque de synchronisation de commutation (9), dans lequel l'au moins un disque de synchronisation de commutation (9) est disposé sur l'arbre à vis sans fin (5), comprend une rainure concentrique sur une face frontale tournée vers les vis sans fin (61 ; 62) et comprend un évidement radial, dans lequel une tige d'accouplement de l'appareil de commutation (1) est adaptée pour venir en prise avec l'évidement radial du disque de synchronisation de commutation (9) dans la première position de rotation prédéterminée (51) de l'arbre à vis sans fin (5), pour se déplacer dans la rainure du disque de synchronisation de commutation (9) lors de l'accouplement de l'appareil de commutation (1) et de l'arbre à vis sans fin (5), et pour quitter la rainure du disque de synchronisation de commutation (9) dans la seconde position de rotation prédéterminée (52).

6. Engrenage à vis sans fin selon la revendication précédente, en référence à la revendication 2, dans lequel l'au moins un organe de réglage (3) est monté sur la tige d'accouplement.

7. Engrenage à vis sans fin selon la revendication 3, dans lequel l'engrenage à vis sans fin comprend une première vis sans fin intérieure, une première vis sans fin extérieure, une seconde vis sans fin intérieure et une seconde vis sans fin intérieure, dans lequel les premières vis sans fin (61) et les secondes vis sans fin (62) sont espacées par au moins un rouleau pouvant coulisser, dans lequel l'au moins un rouleau pouvant coulisser peut tourner indépendamment des vis sans fin et élargit directement le profil commun continu (11) du trajet de commutation, dans lequel la roue à vis sans fin (8) vient en prise avec les vis sans fin intérieures (61 ; 62) respectives et l'au moins un organe de réglage (3) vient en prise avec les vis sans fin extérieures (61 ; 62) respectives.

8. Engrenage à vis sans fin selon l'une des revendications précédentes, dans lequel le dispositif de commutation comprend en outre au moins un organe d'arrêt (2), dans lequel l'au moins un organe d'arrêt (2) peut coulisser par rapport à l'arbre à vis sans fin (5), en particulier à une distance entre les vis sans fin (61 ; 62), et est conçu pour limiter le déplacement des vis sans fin (61 ; 62) sur l'arbre à vis sans fin (5).

9. Engrenage à vis sans fin selon l'une des revendications précédentes, dans lequel le dispositif de commutation comprend en outre un capteur électromécanique et un actionneur électromécanique, dans lequel le capteur électromécanique est configuré pour détecter la position de rotation de l'arbre à vis sans fin (5), et l'actionneur électromécanique est configuré pour commander le déplacement des vis sans fin (61 ; 62) sur la base de la position de rotation détectée.

10. Procédé de commutation d'une roue à vis sans fin (8) d'un engrenage à vis sans fin selon l'une des revendications 1 à 9, dans lequel le procédé comprend les étapes suivantes :
a) activation du dispositif de commutation,
b) accouplement d'un appareil de commutation (1) du dispositif de commutation avec l'arbre à vis sans fin (5) dans une première position de rotation prédéterminée (11a) de l'arbre à vis sans fin (5),
c) déplacement des vis sans fin (61 ; 62) pendant que l'appareil de commutation (1) est accouplé à l'arbre à vis sans fin (5), dans lequel le déplacement des vis sans fin (61 ; 62) provoque le changement de sens de rotation de la roue à vis sans fin (8) lors d'une rotation continue de l'arbre à vis sans fin (5), et
d) séparation de l'appareil de commutation (1) de l'arbre à vis sans fin (5) dans une seconde position de rotation prédéterminée (52) de l'arbre à vis sans fin (5) afin d'achever le déplacement des vis sans fin (61 ; 62).
